(19) Europäisches Patentamt
European Patent Office
Office européen des brevets

(11) **EP 4 466 621 B1**

(12) **EUROPEAN PATENT SPECIFICATION**

(45) Date of publication and mention
of the grant of the patent:
**17.06.2026 Bulletin 2026/25**

(21) Application number: **23743856.9**

(22) Date of filing: **17.01.2023**

(51) International Patent Classification (IPC):
*G06F 21/55* (2013.01)    *G06F 21/56* (2013.01)
*G06F 21/57* (2013.01)    *G06F 12/14* (2006.01)
*H04L 9/40* (2022.01)

(52) Cooperative Patent Classification (CPC):
**G06F 21/554; H04L 63/1416; H04L 63/1458**

(86) International application number:
**PCT/US2023/060744**

(87) International publication number:
**WO 2023/141422 (27.07.2023 Gazette 2023/30)**

(54) **NETWORK MONITOR WITH A HOMODYNE DETECTOR FOR EARLY IDENTIFICATION OF NETWORK ATTACKS**

NETZWERKMONITOR MIT HOMODYNDETEKTOR ZUR FRÜHERKENNUNG VON NETZWERKANGRIFFEN

DISPOSITIF DE SURVEILLANCE DE RÉSEAU AVEC DÉTECTEUR HOMODYNE POUR IDENTIFICATION PRÉCOCE D'ATTAQUES DE RÉSEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.01.2022 US 202217577773**

(43) Date of publication of application:
**27.11.2024 Bulletin 2024/48**

(73) Proprietor: **CPacket Networks Inc.
Milpitas, CA 95035 (US)**

(72) Inventors:
• **GRUNZWEIG, Tzahi
San Jose, California 95002 (US)**

• **NEVO, Ron
San Jose, California 95002 (US)**
• **COOPER, Douglas
San Jose, California 95002 (US)**

(74) Representative: **Cooley (UK) LLP
22 Bishopsgate
London EC2N 4BQ (GB)**

(56) References cited:
WO-A1-2021/150379        US-A1- 2008 028 467
US-A1- 2008 263 671        US-A1- 2009 006 841
US-A1- 2016 277 357        US-A1- 2019 312 906
US-A1- 2020 380 129        US-A1- 2020 380 129

**Description**

CROSS REFERENCE TO RELATED APPLICATIONS

This application claims priority to U.S. Patent Application No. 17/577,773 filed January 18, 2022.

FIELD OF THE INVENTION

This invention relates generally to security in computer networks. More particularly, this invention is directed to a network monitor with a homodyne detector for early identification of network attacks.

BACKGROUND OF THE INVENTION

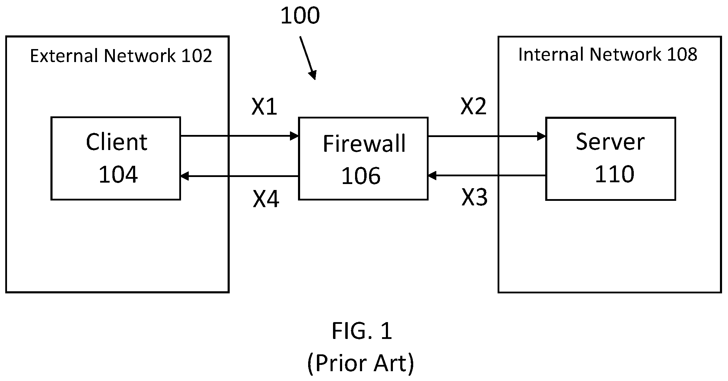

Figure 1 illustrates a prior art system 100 including an external network 102 with at least one client machine 104. A firewall 106 separates the external network 102 from an internal network 108 with at least one server 110.

The client 104 submits incoming requests via the "External Incoming" port X1. In addition to legitimate requests from the client 104, sometimes network attacks are multiplexed on X1. Filtering legitimate requests from illegitimate requests is the purpose of the firewall 106. The filtered request are transmitted from the firewall 106 to the one of potentially many servers 110 in the internal part of the network 108 via port "Internal Incoming" X2. The response from the server 110 is first relayed via the "Internal Outgoing" port X3, and finally transmitted to the client(s) 104 by the firewall 106 via the "External Outgoing" port X4. The relationship between legitimate requests X1_Legit to response X4 is of great interest. For example, the network administrator needs to protect the network from a "Denial of Service Attack", which aims to introduce on X1 a large component of illegitimate requests, X1_attack, from an attacker aiming to bring the ratio X1_legit/X4 to close to zero, by overwhelming the firewall 106 and internal network 108 with an excessive work load, which denies the client 104 from getting responses from the server 110.

It is therefore of great interest to know in real time the X1_legit/X4 ratio. The disclosed solution addresses this problem.

In US2008/0028467 A1, a denial-of-service network attack detection system is deployable in single-homed and multi-homed stub networks. The detection system maintains state information of flows entering and leaving the stub domain to determine if exiting traffic exceeds traffic entering the system. Monitors perform simple processing tasks on sampled packets at individual routers in the network at line speed and perform more intensive processing at the routers periodically. The monitors at the routers form an overlay network and communicate pertinent traffic state information between nodes. The state information is collected and analyzed to determine the presence of an attack.

US2020/0380129 A1 discloses a system and method (referred to as the system) which detect infectious code. The system injects a repetitive software code that causes malware in a monitored device to render a detectable direct current power consumption profile. A guide wave generator generates a guide wave signal that establishes an observational window that is applied to data that represent a direct current source power consumption of the monitored device. An extraction device extracts a portion of the data that represent the direct current source power consumption of the monitored device. A deviation engine identifies the malware on the monitored device without processing data associated with a prior identification of the malware or identifying a source of the malware or identifying a location of the malware on the monitored device.

US2019/0312906 A1 relates to an information security system that incorporates time, feedback, and/or varying trust in analyzing and responding to attacks. A solution can defer processing of a request for a period of time, which can be sufficient to allow the request to be approved or disproved. The solution can be configured to automatically approve or disprove the request after the period of time if no affirmative response is received. Trust for an entity can be periodically determined and can automatically decay over time. Feedback can be used as part of the approval/disproval process and/or to reevaluate trust.

SUMMARY OF THE INVENTION

A system has a firewall ingress node carrying network traffic. An attack injector creates a network attack flow on the firewall ingress node and thereby forms with the network traffic a composite firewall input signal on the firewall ingress node. A firewall egress node carries a response signal corresponding to the composite firewall input signal. A network monitor is connected to the firewall ingress node and the firewall egress node. The network monitor includes a homodyne detector to multiply the response signal by an oscillating driver signal to form a product that is integrated over time to form a homodyne detector response signal that is larger when the homodyne detector response signal has some component with the same frequency as the oscillating driver signal.

BRIEF DESCRIPTION OF THE FIGURES

The invention is more fully appreciated in connection with the following detailed description taken in conjunction with the accompanying drawings, in which:

FIGURE 1 illustrates a prior art computer network.
FIGURE 2 illustrates a computer network configured in accordance with an embodiment of the invention.
FIGURE 3 illustrates a response (B) as a function of attack strength for a given modulation strength A0 achieved in accordance with an embodiment of the invention.

Like reference numerals refer to corresponding parts throughout the several views of the drawings.

DETAILED DESCRIPTION OF THE INVENTION

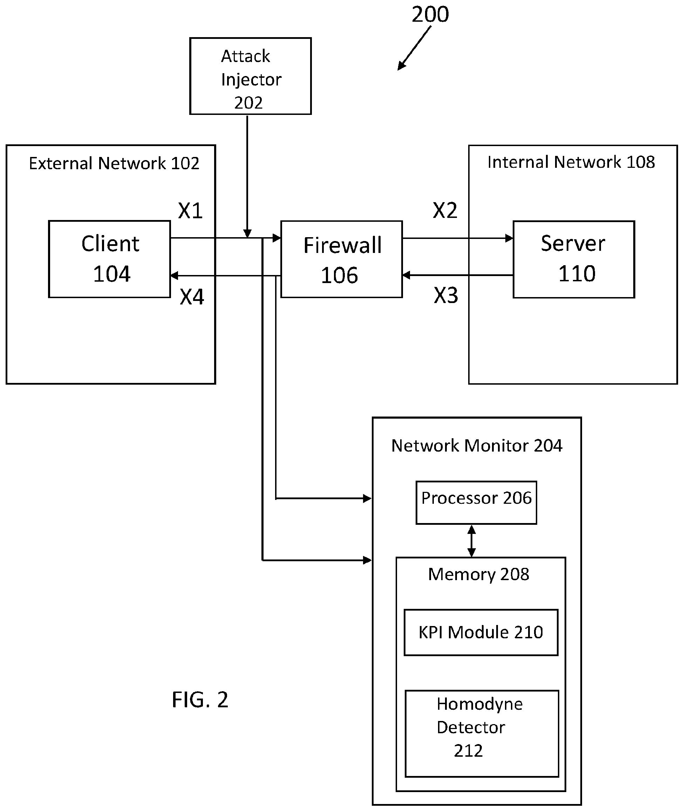

Figure 2 illustrates a network 200 configured in accordance with an embodiment of the invention. The network 200 includes the components of Figure 1. In addition, the network 200 includes an attack injector 202 and a network monitor 204. As shown in Figure 2, the network monitor 204 includes connections to ports X1 and X4. The network monitor 204 monitors these ports at line speed. The network monitor 204 includes a processor 206 connected to a memory 208. The memory 208 stores instructions executed by the processor 206 to implement operations disclosed herein. The instructions include a Key Performance Indicator (KPI) module 210 to supply important network performance measures with high resolution. The memory 208 also stores a homodyne detector 212 with instructions executed by processor 206 to compute a B(t) integral of line data quickly (i.e., not necessarily in real time, but faster than attack ramp up speed) and store the output for further analysis. The homodyne detector 212 may also be implemented using a Field Programmable Gate Array.

The disclosed system 200 provides insights into the performance of the firewall 106 during network attacks. In particular, the system 200 characterizes the sensitivity of X1_legit/X4 to the strength of an attack (X1_attack):

$$X1\_legit/X4 = f(X1\_attack)$$

The system 200 also provides information on latency, which measures the time since the client communicated a request "i" to when the network communicated the server reply to request "i":

$$dt = X4.i.time - X1\_legit.i.time$$

Note that this is total latency, which has a server component. More complex timing systems can measure server component latency (by utilizing X2 and X3 signals). X4.i.time means time of event (i) on channel X4, and similarly X1_legit.i.time means time of legitimate event (i) on channel X1, such that these two events correspond to a specific "conversation", sometimes referred to as a "flow" of communication between client 104 and server 110.

Knowing this allows one to provide early warning, as to the capability of the firewall 106 to withstand future attacks and allows for the organization to make mitigating steps to increase its readiness to perceived threats.

Initially there is a training step to learn a set of parameters that describe the network performance under load. The next step is a deployment step where the learned parameters are used to monitor the network behavior when deployed. Consider the following use case:

1. The network monitor 204 is used to record nominal incoming traffic and measure nominal response.
2. The attack injector 202 creates an attack flow, i.e. a set of packets that imitate an attack. An example of such an attack flow is the "Canadian Institute of Cybertechnology" CIC-2019 data set. Thus, the attack injector 202 may be implemented as a computer supplying CIC-2019 data to node X1.
3. A synthetic signal is formed from the combination of (1) and (2).
4. The ratio between (1) and (2) is controlled. For example, the attack injector 202 can speed up (2) relative to (1) by a constant factor. The constant may be increased to simulate a stronger attack.
5. The network monitor 204 computes:

a. The ratio X1_legit/X4.
b. The latency of X4 to the legitimate (nominal) part of X1.

6. The sequence 4-5 can be performed at some time when a stress test can be performed to find the limits of the system. Thus, the ratio X1_legit/X1 that impedes performance (for example, causes legitimate messages X_legit to be ignored in X4 or increases latency) can be established.

7. Once the thresholds and parameter in (6) are determined, they can be used to deal with real world situations. In the real world there is not predetermined knowledge of the content of information on X1; therefore, some analysis is required to determine if a communication on X1 is legitimate or an attack. One simple solution is to rely on the firewall 106 filtering methods: estimate from X1 the X1_legit by measuring also X2. X2 is the part of X1 which the firewall 106 considers legit. X2/X1 can be an estimator to X1_legit/X1 and a warning can be set to alarm the network administrator as this value increases towards the system limit ascertained ahead of time in step 6. Although not shown in Figure 2, this technique requires an additional connection between the network monitor 204 and node X2.

This embodiment suffers from the drawback that the stress test may require down time for the network. To avoid this drawback, an embodiment of the invention uses a homodyne detector 212. A homodyne detector generates a varying signal of the same or nearly the same frequency as an incoming carrier wave and combines the varying signal with the incoming signal for detection. When monitoring X4 and X1, prior art approaches only see changes in X4 once the X1 attack is large. The X1 signal is weak and buried in noise. The disclosed technique amplifies the X1 signal using a lock-in technique.

The homodyne detector 212 is a "lock-in amplifier" approach to measuring the sensitivity of the network performance to attack. The use of the term lock-in amplifier or lock-in amplification aims to illustrate the homodyne detection scheme, which uses a measurement principle realized in a device. This scheme can be realized, for example, by the literal lock-in-amplifier device, or by electronic circuitry within a network monitor 204. A lock-in amplifier extracts a signal with a known carrier wave from a noisy environment.

This embodiment includes the following operations:

1. The nominal incoming traffic and nominal response are measured using the network monitor 204.
2. An attack is injected using the attack injector 202.
3. Signals (1) and (2) are combined to create a synthetic signal.
4. The ratio between signals (1) and (2) is controlled. For example, signal (2) can be sped up by a modulated factor. Signal (2) can be referred to as a "probe signal". In this probe signal, the attack strength is controlled. For example, a sinusoidal pattern in time may be formed:

$$A(t) = A_0 * \sin\left(2\pi f t + \theta\right)$$

with A0 chosen such that it's the maximum desired strength of attack, sin is the sine function, pi is the pi-constant, f is the frequency in which the attack strength is modulated over time and t is the time.

5. The network monitor 204 measures:

    a. The ratio X1_legit/X4.
    b. The latency of X4 to the legitimate (nominal) part of X1.

The signal on X(4) is further analyzed via the lock-in amplification method in the homodyne detector 212. That is, the homodyne detector ascertains the response to the modulated input from the X(4) signal and the modulated probe signal:

$$B(t) = \int_{t}^{t+T} X_4(\tau) A_0 \sin(2\pi f \tau + \theta)\, d\tau$$

T is chosen to be a large number of cycles: T>>1/f. The integration isolates the response of X4(t) to the modulated input. Thus, the response signal X4 is multiplied by an oscillating driver signal A0sin(2 $\pi$ f $\tau$ + $\theta$). The product is integrated over time. B(t) is higher if the response has some component with the same frequency as the oscillating driver signal. In this case, the oscillating driver signal is the simulated X1_attack and the response is X4. The homodyne detection technique allows for better sensitivity so the attack is easier to detect and requires a lower level of injection compared to the linear injection approach of the first embodiment.

6. The Latency can be measured by injecting another signal to the probe, that is legitimate. For example, the attack injector 202 may inject a signal on X1 and its latency to reach X4 is computed.

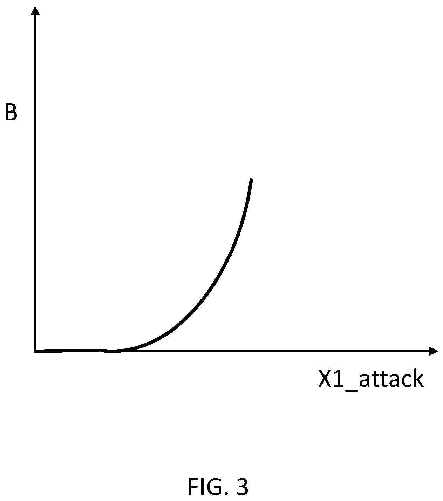

7. Observe that the measurement of B(t) is happening continuously while the network is operating normally. A small amount of attack signal (A0) is constantly injected. The attack signal is small enough to not degrade network performance by itself. The behavior shown in Figure 3 is expected:

8. When no external attack is happening B(t) is zero or close to zero.

9. When the attack strength is low, and within the performance envelope of the firewall 106 B(t) is close to zero.

10. When the attack strength is higher, but still within the performance envelope for the firewall 106 B(t) increases. Notably B(t) is non-zero even when the attack is not strong enough to noticeably hamper performance. This is because the lock-in amplifier method is sensitive to small interferences.

11. B(t) is monitored in real time to provide early warning that an attack is ramping up, and to provide real time warning when the attack reaches a threshold value that requires network administrator attention and mitigation.

12. The phase term in the left-hand-side of the B(t) equation above, can be estimated independently. For example, the estimate may be based upon injecting a request to X1 with an unusual port and monitoring on X4 for a packet with that same port.

An embodiment of the present invention relates to a computer storage product with a computer readable storage medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs, DVDs and holographic devices; magneto-optical media; and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter. For example, an embodiment of the invention may be implemented using JAVA®, C++, or other object-oriented programming language and development tools. Another embodiment of the invention may be implemented in hardwired circuitry in place of, or in combination with, machine-executable software instructions.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.

## Claims

1. A system (200), comprising:

   a firewall ingress node carrying network traffic;
   an attack injector (202) to create a network attack flow on the firewall ingress node and thereby form with the network traffic a composite firewall network traffic input signal on the firewall ingress node;
   a firewall egress node carrying a network traffic response signal corresponding to the composite firewall network traffic input signal; and
   a network monitor (204) connected to the firewall ingress node and the firewall egress node, the network monitor including a homodyne detector (212) to multiply the network traffic response signal by an oscillating driver signal to form a product that is integrated over time to form a homodyne detector network traffic response signal that is larger when the homodyne detector network traffic response signal has some component with the same frequency as the oscillating driver signal thereby indicating a network attack.

2. The system of claim 1 wherein the oscillating driver signal corresponds to the network attack flow.

3. The system of claim 1 wherein the network attack flow is a pre-existing file of packets that imitate a network attack.

4. The system of claim 1 wherein the network monitor analyzes the volume of traffic on the firewall ingress node to the volume of traffic passed by the firewall to form a measure of legitimate network traffic.

**Patentansprüche**

1. System (200), das Folgendes umfasst:

   einen Firewall-Eingangsknoten, der Netzwerkverkehr führt;
   einen Angriffsinjektor (202) zum Erzeugen eines Netzwerkangriffsflusses an dem Firewall-Eingangsknoten und dadurch Bilden eines zusammengesetzten Firewall-Netzwerkverkehr-Eingangssignals mit dem Netzwerkverkehr an dem Firewall-Eingangsknoten;
   einen Firewall-Ausgangsknoten, der ein Netzwerkverkehr-Antwortsignal führt, das dem zusammengesetzten Firewall-Netzwerkverkehr-Eingangssignal entspricht; und
   eine Netzwerküberwachungseinrichtung (204), die mit dem Firewall-Eingangsknoten und dem Firewall-Ausgangsknoten verbunden ist, wobei die Netzwerküberwachungseinrichtung einen Homodyndetektor (212) zum Multiplizieren des Netzwerkverkehr-Antwortsignals mit einem oszillierenden Treibersignal beinhaltet, um ein Produkt zu bilden, das über die Zeit integriert wird, um ein Homodyndetektor-Netzwerkverkehr-Antwortsignal zu bilden, das größer ist, wenn das Homodyndetektor-Netzwerkverkehr-Antwortsignal eine Komponente mit der gleichen Frequenz wie das oszillierende Treibersignal aufweist, wodurch ein Netzwerkangriff angegeben wird.

2. System nach Anspruch 1, wobei das oszillierende Treibersignal dem Netzwerkangriffsfluss entspricht.

3. System nach Anspruch 1, wobei der Netzwerkangriffsfluss eine bereits vorhandene Datei von Paketen ist, die einen Netzwerkangriff imitieren.

4. System nach Anspruch 1, wobei die Netzwerküberwachungseinrichtung das Verkehrsvolumen an dem Firewall-Eingangsknoten zu dem von der Firewall durchgelassenen Verkehrsvolumen analysiert, um ein Maß legitimen Netzwerkverkehrs zu bilden.

**Revendications**

1. Système (200), comprenant :

   un nœud d'entrée de pare-feu acheminant un trafic réseau ;
   un injecteur d'attaque (202) destiné à créer un flux d'attaque réseau sur le nœud d'entrée de pare-feu et ainsi former, avec le trafic réseau, un signal d'entrée de trafic réseau de pare-feu composite sur le nœud d'entrée de pare-feu ;
   un nœud de sortie de pare-feu acheminant un signal de réponse de trafic réseau correspondant au signal d'entrée de trafic réseau de pare-feu composite ; et
   un dispositif de surveillance de réseau (204) connecté au nœud d'entrée de pare-feu et au nœud de sortie de pare-feu, le dispositif de surveillance de réseau comportant un détecteur homodyne (212) destiné à multiplier le signal de réponse de trafic réseau par un signal pilote oscillant afin de former un produit qui est intégré dans le temps pour former un signal de réponse de trafic réseau de détecteur homodyne qui est plus élevé lorsque le signal de réponse de trafic réseau de détecteur homodyne possède une composante ayant la même fréquence que le signal pilote oscillant, indiquant ainsi une attaque réseau.

2. Système selon la revendication 1, dans lequel le signal pilote oscillant correspond au flux d'attaque réseau.

3. Système selon la revendication 1, dans lequel le flux d'attaque réseau est un fichier préexistant de paquets qui imitent une attaque réseau.

4. Système selon la revendication 1, dans lequel le dispositif de surveillance de réseau analyse le volume de trafic sur le nœud d'entrée de pare-feu au regard du volume de trafic transmis par le pare-feu afin de former une mesure du trafic réseau légitime.

FIG. 1
(Prior Art)

200

FIG. 2

FIG. 3

**EP 4 466 621 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 57777322
- US 20080028467 A1
- US 20200380129 A1
- US 20190312906 A1